# EUROPEAN PATENT SPECIFICATION

(11) **EP 4 105 049 B1**
(45) Date of publication and mention of the grant of the patent: **30.04.2025**
(21) Application number: 21180361.4
(22) Date of filing: 18.06.2021
(51) Int. Cl.: B60J 10/30, B60R 13/04

(54) **APPLIQUE WITH MARGIN SEAL**
APPLIKATION MIT RANDABDICHTUNG
APPLIQUE AVEC JOINT DE MARGE

(43) Date of publication of application: 21.12.2022
(73) Proprietor: Cooper-Standard Automotive (Deutschland) GmbH, 89601 Schelklingen (DE)
(72) Inventor: Krefta, Tomasz, 88131 Lindau (DE)
(74) Representative: Witte, Weller & Partner Patentanwälte mbB

(56) References cited:
- EP-A1- 2 450 240
- EP-A2- 1 584 517
- WO-A1-2010/048619
- US-A1- 2015 367 716
- US-B1- 9 114 765

## Description

The present disclosure relates to an applique arrangement for a vehicle surface, particularly for an outer vehicle surface in a pillar region of the vehicle, comprising an applique having a panel portion that extends essentially along a first direction and a second direction transverse to the first direction, and a margin seal which extends along an edge of the applique in the second direction, wherein the panel portion has a panel outer surface for forming a part of the vehicle surface.

Further, the present disclosure relates to a sealing arrangement comprising a sealing strip and a margin seal for an applique arrangement. Also, the present disclosure relates to a method for producing a sealing arrangement and to a method for producing an applique arrangement.

Vehicles, particularly automobiles, include a number of sealing arrangements for sealing in the area of interior access areas like doors, flaps, lids, etc., an interior of the vehicle against the outside.

Particularly in vehicles having four doors, a so-called B-pillar is typically provided as a part of the vehicle body, which B-pillar is arranged between the respective front and rear doors.

In order to provide this area with an aesthetic appearance, it is known to provide so-called appliques between the windows of the front and the rear doors, in order to add styling or cover unsightly portions of the vehicle.

The windows of the front and rear doors are sealed against the outside by respective sealing arrangements. Further, in many cases, a sealing arrangement is provided between the front door and the rear door. This assists in sealing off the interior of the vehicle against the outside and also contributes in reducing noise in the inside of the vehicle (e.g. passenger compartment).

In some cases, the sealing arrangement that is provided between the front door and the rear door in the upper area of the doors (in the window area) is made part of the applique arrangement. Particularly, a margin seal is extruded separately and then adhered (e.g. by thermoplastic welding, glueing etc.) to an edge of the applique, so as to extend between the doors of the vehicle.

In some cases, the margin seal extends between an applique attached to the rear door and an applique attached to the front door of the vehicle.

Document US 4,736,981 B provides an appliqué structure for the external B pillar areas of a four door vehicle. The vehicle structure is one wherein the pair of doors on each side are hingedly mounted at the forward edges and wherein the B pillar areas are defined by the upper door edges. The appliqués are adhered to the B pillar area and form a double seal at the juncture therebetween. Additional seals are provided around the periphery of the appliqués.

Document US 6,416,113 B1 provides an applique for a pillar (e.g., B-pillar) of a vehicle, wherein the applique is a decorative member which is fastened to a vehicle surface (e.g., to a door frame structure adjacent a pillar) in order to add styling and/or to functionally cover unsightly portions of the vehicle. In certain embodiments, the applique includes a glass receiving channel defined in a portion thereof, as well as a hook-shaped retainer member extending from one wall of the channel. Moreover, in certain embodiments, the applique includes a polymer based retainer member attached to a metal portion of the applique for the purpose(s) of: 1) insulating the metal portion of the applique from sheet metal of the door frame structure, 2) covering an end/edge of the metal portion of the applique so as to prevent damage to any component which should rub or bump up against it, and/or 3) fastening the applique to the door frame structure or pillar using at least one fastener integrally molded with the polymer based retainer member.

In some cases, it is preferred to provide the applique with a coating, particularly for imparting the outer surface of the applique with a certain appearance.

Document WO 2010/048619 A1relates to a trim or weatherstrip assembly secured to an associated vehicle. The assembly includes a cover portion that overlies an associated vehicle adjacent an edge. A connection member is defined on the cover portion. A fastener portion includes a detent connection member having first and second portions for operatively and alternatively engaging the connection member in a shipping, first position and in an installed, second position.

It is the object to provide an improved applique arrangement, an improved sealing arrangement, as well as improved methods for producing same.

The above object is achieved by an applique arrangement of claim 1, by a sealing arrangement of claim 11, by a method for producing a sealing arrangement of claim 12, and by a method for producing an applique arrangement of claim 13.

According to the invention as defined in claim 1, an applique arrangement for a vehicle surface, particularly for an outer vehicle surface in a pillar region of the vehicle, comprises an applique and a margin seal. The applique has a panel portion that extends essentially along a first direction and a second direction transverse to the first direction, and has an inner portion. The margin seal extends along an edge of the applique in the second direction. The panel portion, further, has a panel outer surface for forming a part of the vehicle surface. The first inner portion extends essentially in parallel to the margin seal and projects from the panel portion essentially in a third direction which is transverse to the first direction and to the second direction. The margin seal has a plurality of holding portions which are aligned along the direction of extension of the margin seal, and which are arranged at a distance from each other. The first inner portion of the applique has a plurality of receiving portions for receiving respective ones of the holding portions of the margin seal.

The holding portions of the margin seal are aligned along the direction of extension of the margin seal (i.e. the second direction) like a number of protrusions that preferably protrude in a direction transverse to the second direction, preferably protrude in the first direction.

On the other hand, the receiving portions of the first inner portion of the applique are also aligned along the same direction of extension of the margin seal and have each an opening which faces to the margin seal, particularly in the first direction.

Therefore, the margin seal can be joined to the applique by inserting the holding portions into the receiving portions. Therefore, it is not necessary to provide an additional joining step for joining the margin seal to the applique, which in the prior art is done by thermoplastic welding, glueing or the like.

The concept of joining the margin seal and the applique by holding portions inserted into receiving portions of the applique has the additional advantage that the applique can be coated with any coating, even those coatings which would impair a traditional joint between the margin seal and the applique. Particularly, when the applique is joined by a metallic coating like a chrome coating, thermoplastic welding will be difficult or have a reduced lifespan.

In addition, the concept of introducing holding portions into the receiving portions can provide an extended joint lifespan.

Further, the holding portions and the receiving portions can be formed within a very small installation space, particularly in the third direction. Therefore, it is possible to provide the applique arrangement such that the applique does not protrude significantly in the third direction from respective window outer surfaces, so as to improver the overall aesthetic appearance.

The disclosed sealing arrangement comprises a sealing strip and a margin seal for the applique arrangement of the present invention wherein the sealing strip and the margin seal are joined by means of a mold portion. The sealing strip is particularly a sealing strip that extends in the second direction and is used as a sealing strip for receiving a side edge of a window of a vehicle door, particularly a rear door window.

The sealing strip is preferably an extruded sealing strip, made of TPE or EPDM or the like. The margin seal is also preferably an extruded part, made of the same or a different type of material. The margin seal is typically cut after extruding so as to provide the respective holding portions.

The sealing strip and the margin seal are joined by means of a mold portion.

In other words, the margin and the sealing strip are introduced into an injection molding form, and are joined to each other by means of a mold material injected into the tool.

Therefore, the method of producing a sealing arrangement according to the present disclosure comprises the steps of providing a sealing strip, providing a margin seal that has a plurality of holding portions which are aligned along the direction of extension of the margin seal, and which are arranged at a distance from each other, and molding an end portion of the margin seal to the sealing strip.

The method of producing an applique arrangement of the present disclosure comprises the steps of: providing a margin seal that has a plurality of holding portions which are aligned along the direction of extension of the margin seal, and which are arranged at a distance from each other, particularly a margin seal of a sealing arrangement as produced in accordance with the present disclosure, and providing an applique having a panel portion and a first inner portion, wherein the first inner portion has a plurality of receiving portions for receiving respective ones of the holding portions of the margin seal, and inserting the holding portions into the receiving portions so as to produce an applique arrangement.

The material of the applique is preferably a plastic material, which can be coated by another plastic material or by a metallic material. The applique can be a 1K-plastic material or can be a 2K- or 3K-compound plastic material.

Therefore, the above object is achieved in full.

Preferably, the receiving portions are formed as through holes in the first inner portion.

This embodiment allows to produce the applique easily, for example by injection molding, wherein the injection molded plastic part is preferably coated thereafter.

In accordance with another embodiment, the holding portions are integral with a body portion of the margin seal.

Preferably, the margin seal is an extruded part, wherein the holding portions are formed by cutting out intermediate portions between the holding portions. The cutting step can be made by a knife, by a laser or by any other suitable tool.

In the applique arrangement of the present invention, the first inner portion has a radial part that extends from the panel portion in the third direction, and has an axial part that extends from the radial part.

The axial part preferably extends essentially in parallel to the applique and extends preferably from the radial part in the first direction.

In this embodiment, an end portion of the panel portion and the first inner portion form a U-shape in cross section. Therefore, it is possible to introduce a part of a structure of the vehicle (a part of the door, for example) into the U-shaped cross section, so as to allow a stable attachment of the applique arrangement to the structure.

In the applique arrangement of the present invention, at least one of the holding portions has an elastically deformable holding lip which can be compressed in the third direction between the axial part of the first inner portion and a structure of the vehicle when fitted to the vehicle.

The holding lip is preferably formed at an end of the holding portions, which is introduced through the receiving portions and extends into the U-formed cross section. The holding lip can particularly be used to "draw" the applique against the structure of the vehicle in the third direction, so as to provide a stable attachment of the applique arrangement to the structure of the vehicle.

In another preferred embodiment, at least one of the holding portions has an elastically deformable locking lip which locks against the first inner portion when inserted into the respective receiving portion.

The locking lip is also preferably formed at the holding portion in a manner that the locking lip is guided through a receiving portion when the respective holding portion is inserted therein. The locking lip is preferably formed such that it is deformed in the third direction when the holding portion is introduced into the respective receiving portion, an elastically flaps back into a locking position. In the locking position, the locking flap engages an inner side of the first inner portion (particularly the radial part thereof) and prevents that the margin seal comes loose during operation of the vehicle.

Further, it is preferred if the margin seal has a body portion from which the holding portions project to one side in the first direction, and wherein the margin seal has a sealing lip portion which projects from the body portion to an opposite side in the first direction.

The sealing lip portion is the portion which extends from the body portion to the adjacent structure of the vehicle, particularly from the rear door to the front door or from the rear door applique to a front door applique, so as to seal off the interior of the vehicle when the doors are closed.

The material of the margin seal is preferably TPE or EPDM.

The material of the sealing strip mentioned above is also preferably TPE or EPDM.

The material of the applique is preferably a plastic material that is harder than the material of the margin seal.

In another preferred embodiment, the applique is coated with a coating, particularly a metallic coating like a chrome coating.

Further, it is overall preferred if the applique has a second inner portion which defines a sealing strip receptacle for receiving a sealing strip.

While the first inner portion is preferably provided in the area of a first end of the panel portion in the first direction, the second inner portion is preferably provided in the area of an opposite end of the panel portion in the first direction.

The second inner portion can be provided for receiving the sealing strip and/or for attaching the applique to a structure of the vehicle.

Therefore, it is preferred if the second inner portion comprises at least one attachment location for attaching the second inner portion to a structure of the vehicle.

In one embodiment, the second inner portion can be screwed or otherwise fastened to the structure of the vehicle.

The second inner portion, preferably, also provides a U-shaped cross section, together with a part of the panel portion. The U-shaped part forms the sealing strip receptacle. The U-shaped cross section is preferably open on the same side in the first direction as is the U-shaped first inner portion, which is formed by a radial part and an axial part, together with a part of the panel portion.

It will be understood that the afore-mentioned features and to be described hereinafter cannot only be used in the respectively given combination, but also in different combinations or independently, without leaving the scope of the present invention.

Further features and advantages of the invention can be taken from the subsequent description of preferred embodiments with reference to the drawings. In the drawings:
Fig. 1 is a schematic side view of a vehicle having an applique arrangement;
Fig. 2 is cross-sectional view of an embodiment of an applique arrangement, corresponding to a cross-section along a line II-II in Fig. 1;
Fig. 3 is a side view of an embodiment of sealing arrangement comprising a margin seal and a sealing strip that are molded together, for the applique arrangement of Fig. 2;
Fig. 4 is an enlarged side view of the margin seal of Fig. 3;
Fig. 5 is a side view of an applique for the applique arrangement of Fig. 2; and
Fig. 6 is cross-sectional view of a prior art applique arrangement, corresponding to a cross-section along a line II-II in Fig. 1;

In the following, embodiments of the present disclosure are described in detail.

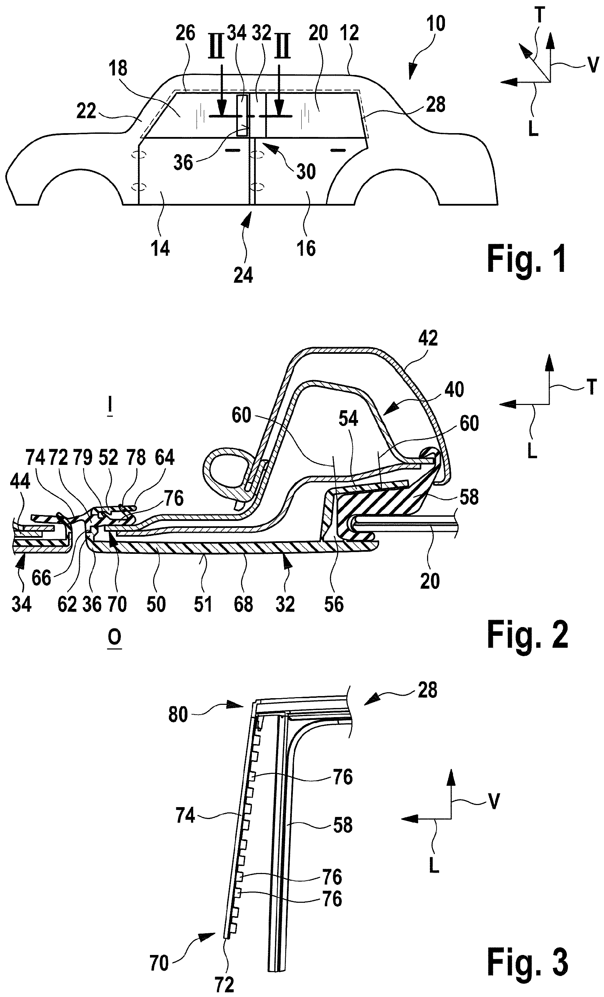

An automobile like a passenger car vehicle is schematically shown in Fig. 1 and generally denoted by 10. The vehicle 10 has a body 12, to which are hingedly connected a front door 14 and a rear door 16.

The front door 14 has a front door window 18. The rear door 16 has a rear door window 20.

The front door 14 and the rear door 16 are each preferably hingedly mounted at the respective forward edges. The body 12 includes an A-pillar region 22 in the area of the forward edge of the front door 14, and a B-pillar region 24 which is arranged essentially between the front door 14 and the rear door 16. Preferably, the rear door 16 is hingedly mounted to the B-pillar region 24.

The front door 14 has a front door window sealing arrangement 26 for the front door window 18. The rear door 16 has a rear door window sealing arrangement 28 for the rear door window 20.

The body 12 defines a first direction L, which is preferably a longitudinal direction of the vehicle 10. Further, the body 12 defines a second direction V which is preferably a vertical direction of the vehicle 10. In addition, the body 12 defines a third direction T, which is preferably a transverse direction of the vehicle. The three directions are also used to describe an applique arrangement.

The vehicle 10 includes an applique arrangement 30 which is provided in the B-pillar region 24 between the front door window 18 and the rear door window 20.

The applique arrangement 30 includes a first applique which is assigned to the rear door 16, and preferably also a second applique 34 which is assigned to the front door 14. The second applique 34 is an optional element. Each of the appliques 32, 34 extend essentially in a flat shape along the first direction L and the second direction V and provide an aesthetic appearance in the B-pillar region.

The first applique 32 has an applique edge 36 which extends along the second direction V.

Fig. 2 shows a cross section of the applique arrangement 30 along a line II-II in Fig. 1, in accordance with an embodiment of the present disclosure.

The rear door 16 has a rear door B-pillar structure 40 to which an B-pillar inner lining 42 is attached which faces into an interior I of the vehicle 10, i.e. to a passenger compartment. A front door rear edge structure is shown schematically at 44. It can be seen, that the optional second applique 34 is attached to the front door rear edge structure 44.

The front door 14 and the rear door 16 are provided for separating the interior I of the vehicle from the outside O thereof, or allowing access thereto when opened

The first applique 32 has a panel portion 50 which essentially extends along the first direction L and the second direction V. The panel portion 50 has a panel outer surface 51, which is visible from the outside O of the vehicle.

Further, the first applique 32 has a first inner portion 52 and a second inner portion 54.

The first inner portion 52 is joined to the panel portion 50 in the area of a front portion of the panel portion 50 in the first direction L. On the other hand, the second inner portion 54 is joined to the panel portion 50 in an area of a rear portion of the panel portion 50 in the first direction L.

The second inner portion 54 forms a sealing strip receptacle 56 which has a U-shaped cross section along a plane defined by the first direction L and the third direction T.

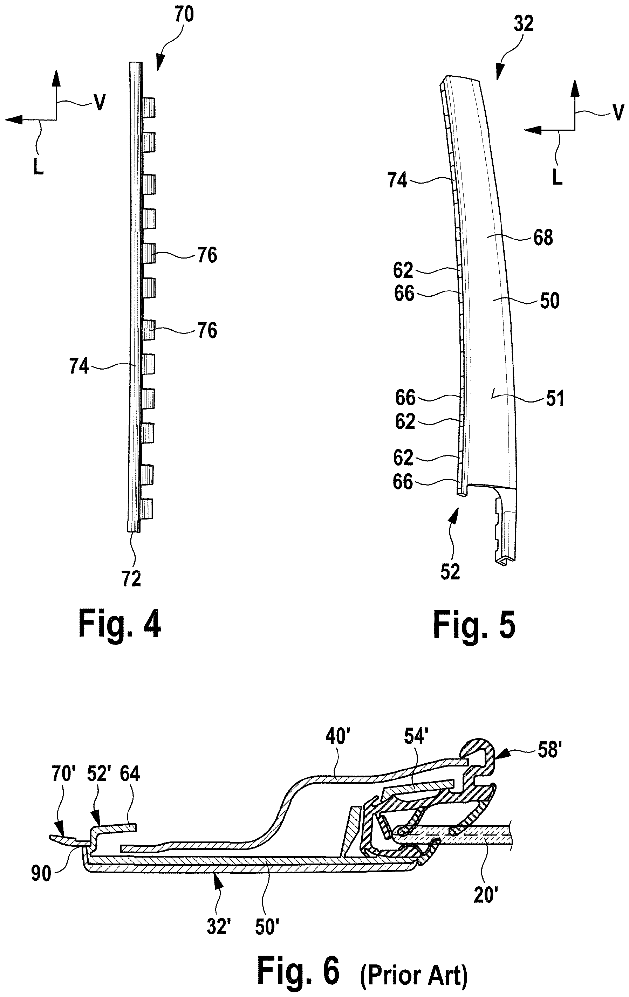

A sealing strip 58 is introduced into the sealing strip receptacle 56. The sealing strip 58 guides a front edge of the rear door window 20 in this embodiment. The sealing strip 58 is shown schematically. Typically, the sealing strip 58 includes a number of sealing lips for engaging the window 20 and/or a number of locking portions for engaging the rear door B-pillar structure 40, as is shown in Fig. 6

The second inner portion 54 comprises at least one attachment location 60 for attaching the second inner portion 54 to the structure 40.

The first inner portion 52 includes a radial part 62 which is joined to the first applique 32 at the applique edge 36 thereof. The radial part 62 projects from the panel portion 50 essentially in the third direction T, and extends along the second direction V.

The first inner portion 52, further, includes an axial part 64 which is joined to an inner portion of the radial part 62. The axial part 64 projects from the radial part 62 in the first direction L, and extends in the second direction V. The front part of the panel portion 50, the radial part 62 and the axial part 64 form a U-shaped cross section along a plane defined by the first direction L and the third direction T.

The radial part 62 has a number of margin seal receiving portions 66, one of which being shown in Fig. 2. The margin seal receiving portions 66 are formed as through holes in the radial part 62. Each of the trough holes extends in the first direction L. The receiving portions 66 are aligned along the second direction V, as can be seen in Fig. 5, and are arranged at a distance from each other in the second direction V.

The first applique 32 is preferably provided with an outer coating 68, which is preferably a metallic coating like a chrome coating.

The applique arrangement 30 includes a margin seal 70. The margin seal 70 is shown in detail in Figs. 3 and 4.

The margin seal 70 includes a body portion 72 that extends essentially along the second direction V. Further, the margin seal 70 includes a sealing lip portion 74. The sealing lip portion 74 projects from the body portion 72 in the first direction L, particularly in a forward direction if the applique arrangement 30 is fitted to the vehicle structure 44.

As can be seen in Fig. 2, the sealing lip portion 74 is arranged so as to bridge the distance between the first applique 32 and the front door, particularly the second applique 34 of the front door. The sealing lip portion 74 extends along the second direction V.

Further, the margin seal 70 includes a number of holding portions 76. Each of the holding portions 76 protrudes from the body portion 72 in the first direction L, particularly to a side in the first direction which is opposite to the side into which the sealing lip portion 74 projects.

The holding portions 76 are each assigned to a respective receiving portion 66, are aligned along the second direction V and are arranged at a distance from each other.

Further, at least one of the holding portions 76 of the margin seal 70 includes a holding lip 78. The holding lip 78 is provided in an end area of the respective holding portion 76.

As can be seen in Fig. 2, the holding portions 76 of the margin seal 70 are introduced into the respective receiving portions 66 such that the holding portions 76 project into the U-shaped cross section formed by the panel portion 50 and the first inner portion 52.

Particularly, the holding portions 76 are introduced into the U-shaped cross section such that the holding portions 76 are arranged between a portion of the rear door B-pillar structure 40, which extends into the U-shaped section, and the axial part 64 of the first inner portion 52.

The holding lips 78 are arranged such that they are elastically deflected between the structure 40 and the axial part 64 in the third direction T, and thereby convey a force onto the panel portion 50 which is directed to the interior I of the vehicle 10.

In addition, at least one of the holding portions 76 of the margin seal 70 includes a locking lip 79 which is provided between the body portion 72 and the holding lip 78.

When inserted into the receiving portion 66, the locking lip 79 of the holding portion 76 engages behind a portion of the radial part 62 and/or of the axial part 64, so as to lockingly engage the first inner portion 52. The locking lip 79 serves to secure the margin seal 70 to the first applique 32, particularly against forces in the first direction L.

As can be seen in Fig. 4, the margin seal 70 can be an extruded element, from which intermediate portions between holding portions 76 are cut out.

The first applique 32 is typically an injection molded element having the number of margin seal receiving portions 66 in the radial part 62 of the first inner portion 52 thereof, and the panel outer surface 51 which forms the visible part of the panel portion 50.

The margin seal 70 and the sealing strip 58 are joined together by means of a mold portion 80, as can be seen in Fig. 3.

In fact, the mold portion 80 may be provided for joining the margin seal 70, the sealing strip 58 and also an upper portion of the rear door window sealing arrangement 28 together.

Therefore, the applique arrangement 30 is preferably produced by first joining the margin seal 70 and the sealing strip 58 via the mold portion 80. In a second step, the first applique 32 is formed by injection molding and optionally coated. In a third step, the first applique 32 is attached to the margin seal 70, by introducing the holding portions 76 into the receiving portions 66. in some examples, the sealing strip is inserted in the sealing strip receptacle 56.

Finally, the so-produced applique arrangement 30 can be mounted to the body 12 of the vehicle, particularly to the rear door B-pillar structure 40.

Fig. 6 shows a prior art applique arrangement, having a first applique 32' which comprises a panel portion 50' and a first inner portion 52'. The first inner portion 52' has an axial part 64 as in the above embodiments.

A margin seal 70' is attached to an edge of the first applique 32' by means of a thermoplastic weld 90.

In Fig. 6, a sealing strip 58' is shown which may replace the sealing strip 58 shown schematically in Fig. 2.

### Reference numerals

- 10: automobile/vehicle
- 12: body
- 14: front door
- 16: rear door
- 18: front door window
- 20: rear door window
- 22: A-pillar region
- 24: B-pillar region
- 26: front door window sealing arrangement
- 28: rear door window sealing arrangement
- 30: applique arrangement
- 32: first applique
- 34: second applique
- 36: applique edge
- 40: rear door B-pillar structure
- 42: B-pillar inner lining
- 44: front door rear edge structure

- 50: panel portion (32)
- 51: panel outer surface (visible)
- 52: first (front) inner portion (32)
- 54: second (rear) inner portion (32)
- 56: sealing strip receptacle
- 58: sealing strip
- 60: attachment location
- 62: radial part (52)
- 64: axial part (52)
- 66: margin seal receiving portions
- 68: coating

- 70: margin seal
- 72: body portion (70)
- 74: sealing lip portion (70)
- 76: holding portions (70) for 66
- 78: holding lip (76)
- 79: locking lip (76)
- 80: mould portion
- 90: thermoplastic weld

- L: longitudinal (first) direction
- V: vertical (second) direction
- T: transversal (third) direction
- I O: inside outside

## Claims

1. An applique arrangement (30) for a vehicle surface, particularly for an outer vehicle surface in a pillar region (24) of the vehicle (10), comprising:
- an applique (32) having a panel portion (50) that extends essentially along a first direction (L) and a second direction (V) transverse to the first direction (L), and having a first inner portion (52),
- a margin seal (70) which extends along an edge (36) of the applique (32) in the second direction (V),
wherein the panel portion (50) has a panel outer surface (51) for forming a part of the vehicle surface,
wherein the first inner portion (52) extends essentially in parallel to the margin seal (70) and projects from the panel portion (50) essentially in a third direction (T) which is transverse to the first direction (L) and to the second direction (V),
wherein the margin seal (70) has a plurality of holding portions (76) which are aligned along the direction of extension of the margin seal (70), and which are arranged at a distance from each other,
wherein the first inner portion (52) of the applique (32) has a plurality of receiving portions (66) for receiving respective ones of the holding portions (76) of the margin seal (70),
**characterised in that** the first inner portion (52) has a radial part (62) that extends from the panel portion (50) in the third direction (T), and has an axial part (64) that extends from the radial part (62), and
wherein at least one of the holding portions (76) has an elastically deformable holding lip (78) which can be compressed between the axial part (64) of the first inner portion (52) and a structure (40) of the vehicle (10) when fitted to the vehicle (10).

2. The applique arrangement of claim 1, wherein the receiving portions (66) are formed as through holes in the first inner portion (52).

3. The applique arrangement of claim 1 or 2, wherein the holding portions (76) are integral with a body portion (72) of the margin seal (70).

4. The applique arrangement of any one of claims 1 to 3, wherein the material of the margin seal (70) is TPE or EPDM.

5. The applique arrangement of claim 4, wherein the material of the applique (32) is a plastic material that is harder than the material of the margin seal (70).

6. The applique arrangement of any one of claims 1 to 5, wherein at least one of the holding portions (76) has an elastically deformable locking lip (79) which locks against the first inner portion (52) when inserted into the respective receiving portion (66).

7. The applique arrangement of any one of claims 1 to 6, wherein the margin seal (70) has a body portion (72) from which the holding portions (76) project to one side in the first direction (L), and wherein the margin seal (70) has a sealing lip portion (74) which projects from the body portion (72) to an opposite side in the first direction (L).

8. The applique arrangement of any one of claims 1 to 7, wherein the applique (32) is coated with a coating (68).

9. The applique arrangement of any one of claims 1 to 8, wherein the applique (32) has a second inner portion (54) which defines a sealing strip receptacle (56) for receiving a sealing strip (58).

10. The applique arrangement of claim 9, wherein the second inner portion (54) comprises at least one attachment location (60) for attaching the second inner portion (54) to a structure (40) of the vehicle (10).

11. A sealing arrangement (28) comprising a sealing strip (58) and the margin seal (70) for the applique arrangement (30) of any one of claims 1 to 10, wherein the sealing strip (58) and the margin seal (70) are joined my means of a mold portion (80).

12. A method of producing a sealing arrangement (28) according to claim 11, comprising the steps of:
- providing a sealing strip (58),
- providing a margin seal (70) that has a plurality of holding portions (76) which are aligned along the direction of extension of the margin seal (70), and which are arranged at a distance from each other, wherein the material of the margin seal (70) is TPE or EPDM, and
- molding an end portion of the margin seal (70) to the sealing strip (58).

13. A method of producing an applique arrangement (30) according to any one of claims 1 to 10, comprising the steps of:
- providing a margin seal (70) that has a plurality of holding portions (76) which are aligned along the direction of extension of the margin seal (70), and which are arranged at a distance from each other, particularly a margin seal of a sealing arrangement as produced in accordance with claim 12, and
- providing an applique (32) having a panel portion (50) and a first inner portion (52), wherein the first inner portion (52) has a plurality of receiving portions (66) for receiving respective ones of the holding portions (76) of the margin seal (70), wherein the material of the applique (32) is a plastic material that is harder than the material of the margin seal (70), and
- inserting the holding portions (76) into the receiving portions (66) so as to produce an applique arrangement (30).

## Patentansprüche

1. Eine Applique-Anordnung (30) für eine Fahrzeugoberfläche, insbesondere für eine äußere Fahrzeugoberfläche in einem Säulenbereich (24) des Fahrzeugs (10), umfassend:
ein Applique (32) mit einem Plattenabschnitt (50), der sich im Wesentlichen entlang einer ersten Richtung (L) und einer zweiten Richtung (V), die zur ersten Richtung (L) quer verläuft, erstreckt, und mit einem ersten inneren Abschnitt (52),
eine Randdichtung (70), die sich entlang einer Kante (36) des Applique (32) in der zweiten Richtung (V) erstreckt,
wobei der Plattenabschnitt (50) eine Plattenaußenfläche (51) aufweist, die einen Teil der Fahrzeugoberfläche bildet,
wobei der erste innere Abschnitt (52) sich im Wesentlichen parallel zu der Randdichtung (70) erstreckt und von dem Plattenabschnitt (50) im Wesentlichen in einer dritten Richtung (T) vorragt, die quer zu der ersten Richtung (L) und zu der zweiten Richtung (V) verläuft,
wobei die Randdichtung (70) eine Mehrzahl von Halteabschnitten (76) aufweist, die entlang der Erstreckungsrichtung der Randdichtung (70) ausgerichtet sind und in einem Abstand zueinander angeordnet sind,
wobei der erste innere Abschnitt (52) des Applique (32) eine Mehrzahl von Aufnahmeabschnitten (66) aufweist, um jeweilige Halteabschnitte (76) der Randdichtung (70) aufzunehmen,
**dadurch gekennzeichnet, dass**
der erste innere Abschnitt (52) einen radialen Teil (62) aufweist, der sich von dem Plattenabschnitt (50) in der dritten Richtung (T) erstreckt, und einen axialen Teil (64) aufweist, der sich von dem radialen Teil (62) erstreckt, und
wobei mindestens einer der Halteabschnitte (76) eine elastisch verformbare Haltelippe (78) aufweist, die zwischen dem axialen Teil (64) des ersten inneren Abschnitts (52) und einer Struktur (40) des Fahrzeugs (10) komprimiert werden kann, wenn sie an dem Fahrzeug (10) angebracht ist.

2. Die Applique-Anordnung gemäß Anspruch 1, wobei die Aufnahmeabschnitte (66) als Durchgangslöcher in dem ersten inneren Abschnitt (52) ausgebildet sind.

3. Die Applique-Anordnung gemäß Anspruch 1 oder 2, wobei die Halteabschnitte (76) integral mit einem Körperabschnitt (72) der Randdichtung (70) ausgebildet sind.

4. Die Applique-Anordnung gemäß einem beliebigen der Ansprüche 1 bis 3, wobei das Material der Randdichtung (70) TPE oder EPDM ist.

5. Die Applique-Anordnung gemäß Anspruch 4, wobei das Material des Applique (32) ein Kunststoffmaterial ist, das härter ist als das Material der Randdichtung (70).

6. Die Applique-Anordnung gemäß einem beliebigen der Ansprüche 1 bis 5, wobei mindestens einer der Halteabschnitte (76) eine elastisch verformbare Verriegelungslippe (79) aufweist, die sich gegen den ersten inneren Abschnitt (52) verriegelt, wenn sie in den jeweiligen Aufnahmeabschnitt (66) eingesetzt wird.

7. Die Applique-Anordnung gemäß einem beliebigen der Ansprüche 1 bis 6, wobei die Randdichtung (70) einen Körperabschnitt (72) aufweist, von dem die Halteabschnitte (76) zu einer Seite in der ersten Richtung (L) vorragen, und wobei die Randdichtung (70) einen Dichtlippenabschnitt (74) aufweist, der von dem Körperabschnitt (72) zu einer gegenüberliegenden Seite in der ersten Richtung (L) vorragt.

8. Die Applique-Anordnung gemäß einem beliebigen der Ansprüche 1 bis 7, wobei das Applique (32) mit einer Beschichtung (68) beschichtet ist.

9. Die Applique-Anordnung gemäß einem beliebigen der Ansprüche 1 bis 8, wobei das Applique (32) einen zweiten inneren Abschnitt (54) aufweist, der eine Dichtstreifenaufnahme (56) zum Aufnehmen eines Dichtstreifens (58) definiert.

10. Die Applique-Anordnung gemäß Anspruch 9, wobei der zweite innere Abschnitt (54) mindestens eine Befestigungsstelle (60) zum Befestigen des zweiten inneren Abschnitts (54) an einer Struktur (40) des Fahrzeugs (10) umfasst.

11. Eine Dichtungsanordnung (28), umfassend einen Dichtstreifen (58) und die Randdichtung (70) für die Applique-Anordnung (30) gemäß einem beliebigen der Ansprüche 1 bis 10, wobei der Dichtstreifen (58) und die Randdichtung (70) durch ein Formteil (80) miteinander verbunden sind.

12. Ein Verfahren zur Herstellung einer Dichtungsanordnung (28) gemäß Anspruch 11, umfassend die Schritte:
- Bereitstellen eines Dichtstreifens (58),
- Bereitstellen einer Randdichtung (70), die eine Mehrzahl von Halteabschnitten (76) aufweist, die entlang der Erstreckungsrichtung der Randdichtung (70) ausgerichtet sind und in einem Abstand zueinander angeordnet sind, wobei das Material der Randdichtung (70) TPE oder EPDM ist, und
- Gießen eines Endabschnitts der Randdichtung (70) an den Dichtstreifen (58).

13. Ein Verfahren zur Herstellung einer Applique-Anordnung (30) gemäß einem der Ansprüche 1 bis 10, umfassend die Schritte:
- Bereitstellen einer Randdichtung (70), die eine Mehrzahl von Halteabschnitten (76) aufweist, die entlang der Erstreckungsrichtung der Randdichtung (70) ausgerichtet sind und in einem Abstand zueinander angeordnet sind, insbesondere eine Randdichtung einer Dichtungsanordnung, die gemäß Anspruch 12 hergestellt wurde, und
Bereitstellen eines Applique (32) mit einem Plattenabschnitt (50) und einem ersten inneren Abschnitt (52), wobei der erste innere Abschnitt (52) eine Mehrzahl von Aufnahmeabschnitten (66) aufweist, um jeweilige Halteabschnitte (76) der Randdichtung (70) aufzunehmen, wobei das Material des Applique (32) ein Kunststoffmaterial ist, das härter ist als das Material der Randdichtung (70), und
Einsetzen der Halteabschnitte (76) in die Aufnahmeabschnitte (66), um eine Applique-Anordnung (30) herzustellen.

## Revendications

1. Dispositif d'applique (30) pour une surface de véhicule, en particulier pour une surface extérieure de véhicule dans une zone montant (24) du véhicule (10), comprenant :
- une applique (32) ayant une portion panneau (50) qui s'étend essentiellement le long d'une première direction (L) et d'une deuxième direction (V) transversale à la première direction (L), et ayant une première portion intérieure (52),
- un joint hermétique de bordure (70) qui s'étend le long d'un bord (36) de l'applique (32) dans la deuxième direction (V),
dans lequel la portion panneau (50) a une surface extérieure de panneau (51) pour former une partie de la surface de véhicule,
dans lequel la première portion intérieure (52) s'étend essentiellement parallèlement au joint hermétique de bordure (70) et fait saillie à partir de la portion panneau (50) essentiellement dans une troisième direction (T) qui est transversale à la première direction (L) et à la deuxième direction (V),
dans lequel le joint hermétique de bordure (70) a une pluralité de portions de maintien (76) qui sont alignées le long de la direction d'extension du joint hermétique de bordure (70) et qui sont agencées à une certaine distance les unes des autres,
dans lequel la première portion intérieure (52) de l'applique (32) a une pluralité de portions de réception (66) destinées à recevoir chacune respective des portions de maintien (76) du joint hermétique de bordure (70),
**caractérisé en ce que**
la première portion intérieure (52) a une partie radiale (62) qui s'étend à partir de la portion panneau (50) dans la troisième direction (T), et a une partie axiale (64) qui s'étend à partir de la partie radiale (62), et
dans lequel au moins l'une parmi les portions de maintien (76) a une lèvre de maintien élastiquement déformable (78) qui peut être comprimée entre la partie axiale (64) de la première portion intérieure (52) et une structure (40) du véhicule (10) lorsqu'elle est montée sur le véhicule (10).

2. Dispositif d'applique selon la revendication 1, dans lequel les portions de réception (66) sont formées en tant que trous traversants dans la première portion intérieure (52).

3. Dispositif d'applique selon la revendication 1 ou 2, dans lequel les portions de maintien (76) font partie intégrante d'une portion corps (72) du joint hermétique de bordure (70).

4. Dispositif d'applique selon l'une quelconque des revendications 1 à 3, dans lequel le matériau du joint hermétique de bordure (70) est du TPE ou de l'EPDM.

5. Dispositif d'applique selon la revendication 4, dans lequel le matériau de l'applique (32) est un matériau plastique qui est plus dur que le matériau du joint hermétique de bordure (70).

6. Dispositif d'applique selon l'une quelconque des revendications 1 à 5, dans lequel au moins l'une parmi les portions de maintien (76) a une lèvre de verrouillage élastiquement déformable (79) qui se verrouille contre la première portion intérieure (52) lorsqu'elle est insérée dans la portion de réception respective (66).

7. Dispositif d'applique selon l'une quelconque des revendications 1 à 6, dans lequel le joint hermétique de bordure (70) a une portion corps (72) à partir de laquelle les portions de maintien (76) font saillie d'un côté dans la première direction (L), et dans lequel le joint hermétique de bordure (70) a une portion lèvre hermétique (74) qui fait saillie de la portion corps (72) d'un côté opposé dans la première direction (L).

8. Dispositif d'applique selon l'une quelconque des revendications 1 à 7, dans lequel l'applique (32) est recouverte d'un revêtement (68).

9. Dispositif d'applique selon l'une quelconque des revendications 1 à 8, dans lequel l'applique (32) a une seconde portion intérieure (54) qui définit un réceptacle de bande hermétique (56) pour recevoir une bande hermétique (58).

10. Applique selon la revendication 9, dans lequel la seconde portion intérieure (54) comprend au moins un emplacement de fixation (60) pour fixer la seconde portion intérieure (54) à une structure (40) du véhicule (10).

11. Dispositif hermétique (28) comprenant une bande hermétique (58) et le joint hermétique de bordure (70) pour le dispositif d'applique (30) selon l'une quelconque des revendications 1 à 10, dans lequel la bande hermétique (58) et le joint hermétique de bordure (70) sont assemblés au moyen d'une portion moulée (80).

12. Procédé permettant de produire un dispositif hermétique (28) selon la revendication 11, comprenant les étapes consistant à :
- fournir une bande hermétique (58),
- fournir un joint hermétique de bordure (70) qui a une pluralité de portions de maintien (76) qui sont alignées le long de la direction d'extension du joint hermétique de bordure (70), et qui sont agencées à une certaine distance les unes des autres, dans lequel le matériau du joint hermétique de bordure (70) est le TPE ou l'EPDM, et
- mouler une portion d'extrémité du joint hermétique de bordure (70) sur la bande hermétique (58).

13. Procédé permettant de produire un dispositif d'applique (30) selon l'une quelconque des revendications 1 à 10, comprenant les étapes consistant à :
- fournir un joint hermétique de bordure (70) qui a une pluralité de portions de maintien (76) qui sont alignées le long de la direction d'extension du joint hermétique de bordure (70) et qui sont agencées à une certaine distance les unes des autres, en particulier un joint hermétique de bordure d'un dispositif hermétique tel que produit selon la revendication 12, et
- fournir une applique (32) ayant une portion panneau (50) et une première portion intérieure (52), dans lequel la première portion intérieure (52) a une pluralité de portions de réception (66) pour recevoir des portions de maintien respectives (76) du joint hermétique de bordure (70), dans lequel le matériau de l'applique (32) est un matériau plastique qui est plus dur que le matériau du joint hermétique de bordure (70), et
- insérer les portions de maintien (76) dans les portions de réception (66) de manière à produire un dispositif d'applique (30).
